# EUROPEAN PATENT APPLICATION

(11) **EP 3 437 792 A1**
(43) Date of publication of application: **06.02.2019**
(21) Application number: 18174829.4
(22) Date of filing: 29.05.2018
(51) Int. Cl.: B23P 15/04, F01D 5/14, F04D 29/32, F01D 9/04

(54) **METHOD OF FABRICATING A TURBINE BLADE**

(30) Priority: 01.08.2017 US 201715666260
(71) Applicant: United Technologies Corporation, Farmington, CT 06032 (US)
(72) Inventor: CRAIG, Brian, Palm Beach Gardens, FL Florida 33410 (US); BERGMAN, Russell J., South Windsor, CT Connecticut 06074 (US)
(74) Representative: Dehns

(57) **Abstract**

A method of manufacturing a blade (32) includes forming a first segment (316; 416) of a blade (32) using a first alloy, forming a second segment (314; 414) of a blade (32) using a second alloy, determining a joint location of the first segment (316; 416) of the blade (32), and joining the first segment (316; 416) and the second segment (314; 414) at the joint location of the first segment (316; 416).

## Description

### GOVERNMENT LICENSE RIGHTS

This disclosure was made with government support under Contract No. W911W6-16-2-0012 awarded by the United States Army. The government has certain rights in the disclosure.

### FIELD

The present disclosure is directed to a gas turbine engine. More particularly, to a turbine blade and a method of fabricating a turbine blade for a gas turbine engine.

### BACKGROUND

Gas turbine engines include a compressor section, a turbine section, and a combustor section. The compressor section pressurizes air. The combustor section burns a hydrocarbon fuel in the presence of the pressurized air. The turbine section extracts energy from combustion gases. Blades and vanes generally reside in the turbine section of the gas turbine engine. Conventional blades are generally fabricated from a single alloy which may not be optimum for all applications. Various regions of conventional blades are often limited by strength or life of the crystal material used to fabricate the blades.

### SUMMARY

In various embodiments, a method of manufacturing a blade includes forming a first segment of a blade using a first alloy, forming a second segment of a blade using a second alloy, determining a joint location of the first segment of the blade, and joining the first segment and the second segment at the joint location of the first segment.

In various embodiments of the method of manufacturing, the first alloy is at least one of a cobalt superalloy and the second alloy is at least one of a nickel-based alloy and a superalloy different from an alloy of the first alloy.

In various embodiments of the method of manufacturing, the second alloy is at least one of a nickel-based alloy and a superalloy different from an alloy of the first alloy.

In various embodiments of the method of manufacturing, the joining the first segment and the second segment includes at least one of frictional welding, diffusion bonding, transient liquid phase bonding, or electron beam welding.

In various embodiments of the method of manufacturing, the first alloy is a single crystal alloy and the second alloy is a single crystal alloy different from the first alloy.

In various embodiments of the method of manufacturing, the first segment is an attachment section and the second segment is an airfoil section.

In various embodiments of the method of manufacturing, the first alloy and the second alloy are directionally solidified alloys.

In various embodiments of the method of manufacturing, the first segment of the blade and the second segment of the blade meet at a joint region, wherein the joint region is at least one of an airfoil root joint or a mid-platform joint.

In various embodiments, the method of manufacturing further includes performing a heat treatment on the blade.

In various embodiments of the method of manufacturing, the heat treatment includes at least one of a solution heat treatment, a precipitation heat treatment, or stress relief.

In various embodiments, a segmented portion of a gas turbine engine includes a first segment, a second segment coupled to the first segment, wherein the first segment is made of a first alloy and the second segment is a second alloy, and wherein the first alloy is different from the second alloy, and a joint region, wherein the joint region includes a location where the first segment and the second segment meet.

In various embodiments of the segmented portion, the first segment and the second segment are joined together to form a blade.

In various embodiments, the first segment and the second segment are joined together to form a vane.
In various embodiments of the segmented portion, the first segment comprises an attachment section and a platform section.

In various embodiments of the segmented portion, the second segment comprises an airfoil and a shroud.

In various embodiments of the segmented portion, the first alloy is a single crystal alloy and the second alloy has equiaxed crystals.

In various embodiments of the segmented portion, the blade has at least one of a single or double knife edge.

In various embodiments of the segmented portion, the first segment and the second segment are coupled together at the joint section placed in a platform section.

In various embodiments of the segmented portion, at least a portion of a heat treatment of the segmented portion occurs after a joining process or before the joining process for one or more of the first alloy and the second alloy.

In various embodiments, a blade for a gas turbine engine includes a first segment including an attachment section, a platform section, wherein the first segment is made of a first alloy, and a second segment including a airfoil section, a tip shroud, and an airfoil root joint, wherein the second segment is made of a second alloy distinct from the first alloy, and wherein the second segment is coupled to the first segment at the airfoil root joint.

The foregoing features and elements may be combined in various combinations without exclusivity, unless expressly indicated otherwise. These features and elements as well as the operation thereof will become more apparent in light of the following description and the accompanying drawings. It should be understood, however, the following description and drawings are intended to be exemplary in nature and non-limiting.

### BRIEF DESCRIPTION OF THE DRAWINGS

Various features will become apparent to those skilled in the art from the following detailed description of the disclosed, non-limiting, embodiments. The drawings that accompany the detailed description can be briefly described as follows:
FIG. 1 is a cross-sectional view of an exemplary gas turbine engine, in accordance with various embodiments;
FIG. 2 is a perspective view of a disk assembly of a gas turbine engine according to various embodiments.
FIG. 3 is a side view of a shrouded turbine blade, in accordance with various embodiments; and
FIG. 4 is a side view of a shrouded turbine blade, in accordance with various embodiments.

### DETAILED DESCRIPTION

All ranges and ratio limits disclosed herein may be combined. It is to be understood that unless specifically stated otherwise, references to "a," "an," and/or "the" may include one or more than one and that reference to an item in the singular may also include the item in the plural.

The detailed description of various embodiments herein makes reference to the accompanying drawings, which show various embodiments by way of illustration. While these various embodiments are described in sufficient detail to enable those skilled in the art to practice the disclosure, it should be understood that other embodiments may be realized and that logical, chemical, and mechanical changes may be made without departing from the scope of the disclosure. Thus, the detailed description herein is presented for purposes of illustration only and not of limitation. For example, the steps recited in any of the method or process descriptions may be executed in any order and are not necessarily limited to the order presented. Furthermore, any reference to singular includes plural embodiments, and any reference to more than one component or step may include a singular embodiment or step. Also, any reference to attached, fixed, connected, or the like may include permanent, removable, temporary, partial, full, and/or any other possible attachment option. Additionally, any reference to without contact (or similar phrases) may also include reduced contact or minimal contact. Cross hatching lines may be used throughout the figures to denote different parts but not necessarily to denote the same or different materials.

As used herein, "aft" refers to the direction associated with the exhaust (e.g., the back end) of a gas turbine engine. As used herein, "forward" refers to the direction associated with the intake (e.g., the front end) of a gas turbine engine. An A-R-C axis is shown in various drawings to illustrate the axial, radial, and circumferential directions, respectively.

As used herein, "radially outward" refers to the direction generally away from the axis of rotation of a turbine engine. As used herein, "radially inward" refers to the direction generally towards the axis of rotation of a turbine engine.

Materials selection for a single alloy blade takes into consideration the expected uses cases for every portion of the blade. Multi-alloy blades may be manufactured so that a single blade comprises multiple materials and, accordingly, blade portions may be created using materials that suit the particular use case for that portion of the blade. Conventional joinery and conventional materials may not be sufficient to create a blade for use in a demand environment, such as, a gas turbine engine. In various embodiments, solid state joining processes may be employed to join at least two different alloy together to form a single blade. For example, the use of multiple alloys in turbine blade manufacturing may be beneficial as a blade may be produced that, in various embodiments, has both lower density and lower weight.

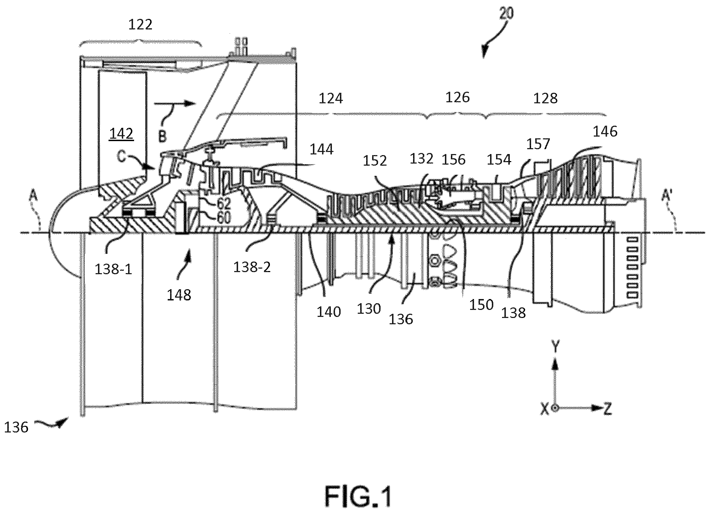

With reference to FIG. 1, a gas turbine engine 20 is shown according to various embodiments. Gas turbine engine 20 may be a two-spool turbofan that generally incorporates a fan section 122, a compressor section 124, a combustor section 126 and a turbine section 128. Alternative engines may include, for example, an augmentor section among other systems or features. In operation, fan section 122 can drive fluid (e.g., air) along a path of bypass airflow B while compressor section 124 can drive fluid along a core flowpath C for compression and communication into combustor section 126 then expansion through turbine section 128. Although depicted as a turbofan gas turbine engine 20 herein, it should be understood that the concepts described herein are not limited to use with turbofans as the teachings may be applied to other types of turbine engines including three-spool architectures.

Gas turbine engine 20 may generally comprise a low speed spool 130 and a high speed spool 132 mounted for rotation about an engine central longitudinal axis A-A' relative to an engine static structure 136 (also referred to as an engine casing structure) via several bearing systems 138, 138-1, and 138-2. Engine central longitudinal axis A-A' is oriented in the z direction on the provided xyz axes. It should be understood that various bearing systems 138 at various locations may alternatively or additionally be provided, including for example, bearing system 138, bearing system 138-1, and bearing system 138-2.

Low speed spool 130 may generally comprise an inner shaft 140 that interconnects a fan 142, a low pressure compressor 144, and a low pressure turbine 146. Inner shaft 140 may be connected to fan 142 through a geared architecture 48 that can drive fan 142 at a lower speed than low speed spool 130. Geared architecture 148 may comprise a gear assembly 160 enclosed within a gear housing 162. Gear assembly 160 couples inner shaft 140 to a rotating fan structure. High speed spool 132 may comprise an outer shaft 150 that interconnects a high pressure compressor 152 and high pressure turbine 154. As used herein, a "high pressure" compressor or turbine experiences a higher pressure than a corresponding "low pressure" compressor or turbine.

A combustor 156 may be located between high pressure compressor 152 and high pressure turbine 154. A mid-turbine frame 157 of engine casing structure 136 may be located generally between high pressure turbine 154 and low pressure turbine 146. Mid-turbine frame 157 may support one or more bearing systems 138 in turbine section 128. Inner shaft 140 and outer shaft 150 may be concentric and rotate via bearing systems 138 about the engine central longitudinal axis A-A', which is collinear with their longitudinal axes.

The core airflow C may be compressed by low pressure compressor 144 then high pressure compressor 152, mixed and burned with fuel in combustor 156, then expanded over high pressure turbine 154 and low pressure turbine 146. Turbines 146, 154 rotationally drive the respective low speed spool F and high speed spool 132 in response to the expansion. The gas turbine engine 20 may be, for example, a high-bypass ratio geared engine. In various embodiments, the bypass ratio of the gas turbine engine 20 may be greater than about six (6). In various embodiments, the bypass ratio of the gas turbine engine 20 may be greater than ten (10). In various embodiments, the geared architecture 148 may be an epicyclic gear train, such as a star gear system (sun gear in meshing engagement with a plurality of star gears supported by a carrier and in meshing engagement with a ring gear) or other gear system. The geared architecture 148 may have a gear reduction ratio of greater than about 2.3 and the low pressure turbine 146 may have a pressure ratio that is greater than about five (5). In various embodiments, the bypass ratio of the gas turbine engine 20 is greater than about ten (10:1). In various embodiments, the diameter of the fan 142 may be significantly larger than that of the low pressure compressor 144, and the low pressure turbine 146 may have a pressure ratio that is greater than about five (5:1). The low pressure turbine 146 pressure ratio may be measured prior to the inlet of the low pressure turbine 146 as related to the pressure at the outlet of the low pressure turbine 146 prior to an exhaust nozzle. It should be understood, however, that the above parameters are exemplary of various embodiments of a suitable geared architecture engine and that the present disclosure contemplates other gas turbine engines including direct drive turbofans. A gas turbine engine may comprise an industrial gas turbine (IGT) or a geared engine, such as a geared turbofan, or non-geared engine, such as a turbofan, a turboshaft, or may comprise any gas turbine engine as desired.

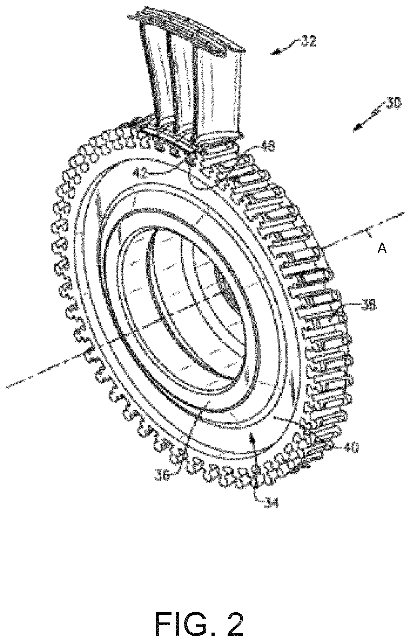

With reference to Figure 2, a rotor assembly 30 such as that of a stage of the LPT is illustrated. Rotor assembly 30 includes a plurality of blades 32 circumferentially disposed around a respective rotor disk 34. The rotor disk 34 generally includes a hub 36, a rim 38, and a web 40 which extends therebetween. It should be understood that a multiple of disks may be contained within each engine section and that although one blade from the LPT section is illustrated and described in the disclosed embodiment, other sections will also benefit herefrom. Although a particular rotor assembly 30 is illustrated and described in the disclosed embodiment, other sections which have other blades such as fan blades, low pressure compressor blades, high pressure compressor blades, high pressure turbine blades, low pressure turbine blades, and power turbine blades may also benefit herefrom.

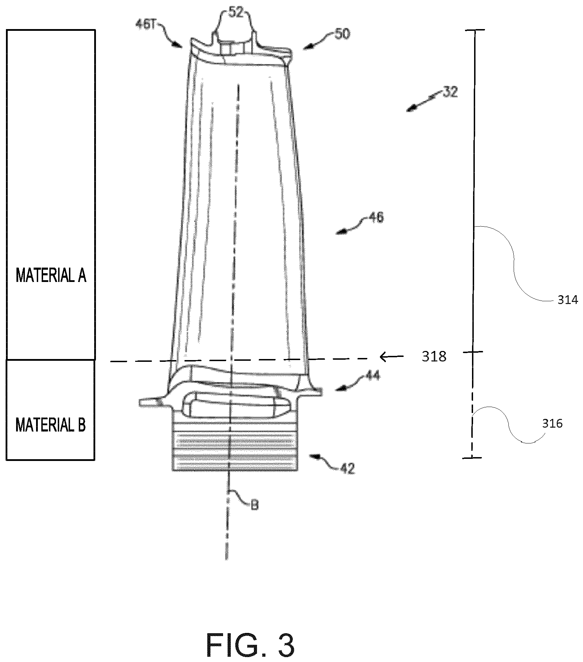

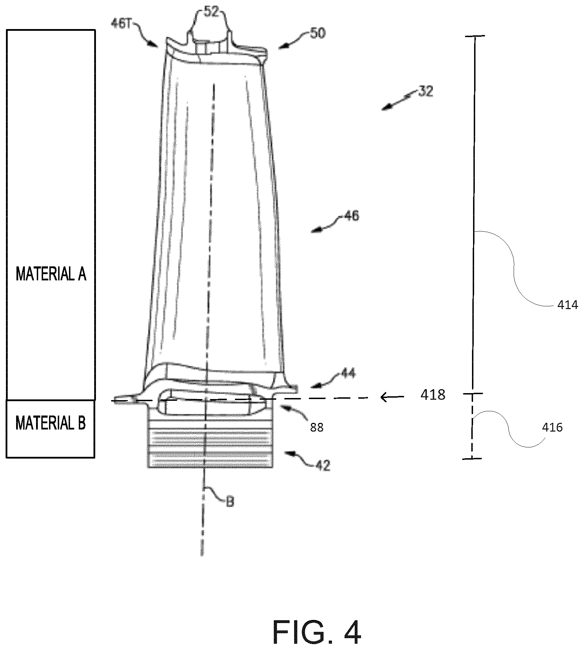

With reference to Figures 3 and 4, each blade 32 generally includes an attachment section 42, a platform section 44, and an airfoil section 46 along a blade axis B. Each of the blades 32 is received within a blade retention slot 48 (as illustrated in Figure 2) formed within the rim 38 of the rotor disk. In various embodiments, airfoil section 46 is coupled to platform section 44. Airfoil section 46 extends from platform section 44. The blade retention slot 48 includes a contour such as a dove-tail, fir-tree or bulb type which corresponds with a contour of the attachment section 42 to provide engagement therewith.

A distal end section 46T includes a tip shroud 50 that may include rails 52 which define knife edge seals which interface with stationary engine structure. The rails 52 define annular knife seals when assembled to the rotor disk 34. That is, the tip shroud 50 on one blade 32 interfaces with the tip shroud 50 on an adjacent blade 32 to form an annular turbine ring tip shroud.

Turning to Figure 3, in various embodiments, a first segment 316, of turbine blade 32, which may include attachment section 42 and platform section 44, is formed using a first alloy. A second segment 314, which may include airfoil section 46 and tip shroud 50, is formed using a second alloy. The first alloy may be, for example, an aluminum alloy or a superalloy, such as a cobalt or a nickel-based alloy. The second alloy, different from the first alloy, may be, for example, an aluminum alloy or a superalloy, such as a cobalt or a nickel-based alloy. A superalloy may generally be an alloy that exhibits additional characteristics over general alloys. For example, a superalloy may have greater mechanical strength, stability, and corrosion resistance such as INCONEL, WASPALOY, PWA 658, etc.

Alternatively, with reference to Figure 4, a first segment 416, of turbine blade 32, which may include attachment section 42 and a portion of platform section 44, is formed using a first alloy. A second segment 414, which may include another portion of the platform section 44, airfoil section 46 and tip shroud 50, is formed using a second alloy. The first alloy may be, for example, a superalloy, such as a cobalt or a nickel-based alloy. The second alloy, selected to be different from the first alloy, may be, for example, a superalloy, such as a cobalt or a nickel-based alloy.

In various embodiments, first segment 316, 416 is formed in a case or casing using the first alloy. Second segment 314, 414 is formed in a second case or casing using the second alloy. After each segment has been formed, they are joined together using various joining processes. In various embodiments, the joining process may produce acceptable material properties in and around a joint region (e.g, 416) or threshold location of the first segment. In various embodiments, the processing order depends upon which path produces the desired combination of properties at, for example, both the joint and in the parent materials. In various embodiments, a threshold location of the first segment may be determined to be, for example, a location with high structural margins and low stress. Such a location may be determined by performing a series of stress tests of the first segment to determine the location where the first segment may be coupled to the second segment. As described below and in conjunction with Figures 3 and 4, the threshold location is at a designated joint location. In various embodiments, one or more solid state processes, such as frictional welding, diffusion bonding, transient liquid phase bonding, and/or electron beam welding may be used to join various segments of blade 32. In various embodiments, an additive manufacturing process may be utilized to form blade 32. In various embodiments of the turbine blade, the heat treatment of the turbine blade occurs after a joining process. In various embodiments of the turbine blade, the heat treatment includes at least one of a solution heat treatment, a precipitation heat treatment, or stress relief.

In various embodiments, as a result of the joining of first segment 316, 416 and second segment 314, 414, blade 32 is formed as a bi-alloy turbine blade whereby multiple elements of different alloys are fabricated together to form a single blade 32. In various embodiments, a plurality of alloys with a plurality of segments may be added such that more than two alloys are utilized. For example, a multi-segment blade with three alloys may fabricated together to form a single blade 32. In various embodiments, blade 32 may contain a first alloy for an attachment region of blade 32 and a second unique alloy for the airfoil section 46 of blade 32. In various embodiments, a tri-segment blade may be comprised of two or three alloys. Partial or total heat treatment of the two or three alloy segments may occur prior to joining of the segments. In various embodiments, a partial heat treatment of the segments may occur prior to joining the segments and the remainder of the heat treatment may occur after joining the segments, when, for example, all segments are joined into a single piece. In various embodiment, blade 32 may be coated with an oxidation resistance or thermal barrier coating. In various embodiments, the coating of blade 32 with an oxidation resistance or thermal barrier coating can also serve as a step in heat treatment or stress relief. In various embodiments, blade 32 may utilize a single crystal alloy for the attachment region including platform section 44 with an equiax alloy being utilized for airfoil section 46. For example, the equiax alloy may include superalloys such as but not limited to, cobalt and nickel-based alloys, such as those sold under the trademarks INCONEL, WASPALOY, and PWA 658 alloys, etc.

In various embodiments, a joint region or threshold location includes the location where the first unique alloy is coupled to the second unique alloy. In various embodiments, as illustrated in Figure 3, the joint region may include an airfoil root joint 318 placed in an airfoil root platform (airfoil section 314, 414). In various embodiments, as illustrated in Figure 4, the joint region may include a mid-platform joint 418 placed in a mid-platform (platform section 314, 414).

In various embodiments, the regions below the platform are often limited by strength or life and want to be a single crystal material. Therefore, introduction of bi-alloy designs with regions below the platform (e.g., with mid-platform joint) are presented. Above platform regions can be creep limited or may lack the benefit from a material of lower density or higher elastic modulus. Therefore, in some embodiments of bi-alloy designs are introduced with a airflow root joint. Thus, downstream components may benefit from reduced blade weight in that in 1) containment structures can be lightened (or thinned) and 2) lower live rim pull can result in lightened rotors or through simplified attachment design. Note that additional benefits may be achieved by the blade in blade tuning by placing materials of preferential density and modulus in influential locations for critical modes. As previously indicated, using bi-alloy blades may be beneficial to the design of gas engine 10. For example, bi-alloy turbine blades offer reduced weight, improved rotor dynamics, which may in turn reduce turbine stage count, and provide tuning benefits. Conventional blades that are fabricated from a single alloy which is often not the optimum for all locations. To illustrate, initial testing indicating the benefits over conventional methods were conducted. In various embodiments, a 3.25% decrease in weight was achieved in using a bi-alloy blade design with mid-platform joint as illustrated in the tables below. Table 1 below illustrates initial test results using a single alloy with BM = 1.31. Table 2 below illustrates initial test results using bi-alloys with BM 1.31. As seen, benefits from the use of two or more alloys are evident as the single alloy test illustrates a residual growth of 0.0769 with a weight of 12.91 lbs (5855.877 grams) as compared to the bi-alloy test where a residual growth of 0.758 was observed and a weight of 12.49 lbs (5665. 369 grams)

**TABLE 1**

| Single Alloy Blade | |
|---|---|
| BM | 1.31 |
| Residual Growth | 0.0769 |
| Weight | 12.91 lb |
| Live Rim Pull (Includes Bolt Pull) | 924,922lbf |

**TABLE 2**

| Bi - Alloy PF | |
|---|---|
| BM | 1.31 |
| Residual Growth | 0.0758 |
| Weight | 12.49 lb |
| Live Rim Pull (Includes Bolt Pull) | 859,384 lbf |

In various embodiments, a 7.23% decrease in weight was achieved using another bi-alloy blade design with an airfoil root joint as illustrated in the tables below with Table 3 using baseline single alloy testing and Table 4 with bi-alloy testing.. Table 3 below illustrates initial test results using a single alloy with BM = 1.31. Table 2 below illustrates initial test results using bi-alloys with BM 1.31. Again, benefits from the use of two or more alloys are evident as the single alloy test illustrates a residual growth of 0.0794 with a weight of 9.96 lbs (4517.780 grams) as compared to the bi-alloy test where a residual growth of 0.787 was observed and a weight of 9.24 lbs (4191.1935 grams).

**TABLE 3**

| Single Alloy Blade | |
|---|---|
| Residual Growth | 0.0794 |
| Weight | 9.96 lb |
| Live Rim Pull (Includes Bolt Pull) | 854,134 lbf |

**TABLE 4**

| Bi - Alloy Blade | |
|---|---|
| Residual Growth | 0.0787 |
| Weight | 9.24 lb |
| Live Rim Pull (Includes Bolt Pull) | 786,928 lbf |

In various embodiments, a similar manufacturing process may be used for a general segmented portion of gas turbine engine, such as a blade or vane. In various embodiments, the segmented portion of the gas turbine engine includes a first segment and a second segment coupled to the first segment and a joint region. The first segment is made of a first alloy and the second segment is a second alloy. The first alloy is different from the second alloy. The joint region includes a location where the first segment and the second segment meet. In various embodiments, the first segment and the second segment are joined together to form a blade. In various embodiments, the first segment and the second segment are joined together to form a vane.

In various embodiments of the segmented portion, when the segmented portion is a blade, the first segment includes an attachment section and a platform section. In various embodiments of the segmented portion, when the segmented portion is a blade, the second segment comprises an airfoil and a shroud. In various embodiments of the segmented portion, when the segmented portion is a blade, the first segment and the second segment are coupled together at the joint section placed in a platform section.

In various embodiments of the segmented portion, the first alloy is a single crystal alloy and the second alloy has equiaxed crystals. In various embodiments of the segmented portion, when the segmented portion is a blade, the blade has at least one of a single or double knife edge. In various embodiments of the segmented portion, at least a portion of a heat treatment of the segmented portion occurs after a joining process or before the joining process for one or more of the first alloy and the second alloy.

While the disclosure is described with reference to exemplary embodiments, it will be understood by those skilled in the art that various changes may be made and equivalents may be substituted without departing from the scope of the disclosure. In addition, different modifications may be made to adapt the teachings of the disclosure to particular situations or materials, without departing from the essential scope thereof. The disclosure is thus not limited to the particular examples disclosed herein, but includes all embodiments falling within the scope of the appended claims.

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of a, b, or c" is used in the claims, it is intended that the phrase be interpreted to mean that a alone may be present in an embodiment, b alone may be present in an embodiment, c alone may be present in an embodiment, or that any combination of the elements a, b and c may be present in a single embodiment; for example, a and b, a and c, b and c, or a and b and c. Different cross-hatching is used throughout the figures to denote different parts but not necessarily to denote the same or different materials.

Systems, methods and apparatus may be provided herein. In the detailed description herein, references to "one embodiment", "an embodiment", "an example embodiment", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

Furthermore, no element, component, or method step in the present disclosure is intended to be dedicated to the public regardless of whether the element, component, or method step is explicitly recited in the claims. No claim element herein is to be construed under the provisions of 35 U.S.C. 112(f), unless the element is expressly recited using the phrase "means for." As used herein, the terms "comprises", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

## Claims

1. A method of manufacturing a blade comprising:
forming a first segment of a blade using a first alloy;
forming a second segment of a blade using a second alloy;
determining a joint location of said first segment of said blade; and
joining said first segment and said second segment at said joint location of said first segment.

2. The method of manufacturing of claim 1, wherein said first alloy is at least one of a cobalt superalloy and said second alloy is at least one of a nickel-based alloy and a superalloy different from an alloy of said first alloy.

3. The method of manufacturing of claim 1, wherein said second alloy is at least one of a nickel-based alloy and a superalloy different from an alloy of said first alloy.

4. The method of manufacturing of claim 1, 2 or 3, wherein said joining said first segment and said second segment includes at least one of frictional welding, diffusion bonding, transient liquid phase bonding, or electron beam welding.

5. The method of manufacturing of any preceding claim, wherein said first alloy is a single crystal alloy and said second alloy is a single crystal alloy different from said first alloy.

6. The method of manufacturing of any preceding claim, wherein said first segment is an attachment section and said second segment is an airfoil section.

7. The method of manufacturing of any preceding claim, wherein said first alloy and said second alloy are directionally solidified alloys, and / or
wherein, optionally, the first segment of said blade and the second segment of said blade meet at a joint region, wherein the joint region is at least one of an airfoil root joint or a mid-platform joint.

8. The method of manufacturing of any preceding claim, further comprising performing a heat treatment on said blade,
wherein, optionally, said heat treatment includes at least one of a solution heat treatment, a precipitation heat treatment, or stress relief.

9. A segmented portion of a gas turbine engine, comprising:
a first segment;
a second segment coupled to said first segment, wherein said first segment is made of a first alloy and said second segment is a second alloy, and wherein the first alloy is different from the second alloy; and
a joint region, wherein the joint region includes a location where the first segment and the second segment meet.

10. The segmented portion of claim 9, wherein said first segment and said second segment are joined together to form a blade,
wherein, optionally, said blade is coated with at least one of an oxidation resistance or thermal barrier coating, and / or
wherein, optionally, said blade has at least one of a single or double knife edge.

11. The segmented portion of claim 9 or 10, wherein said first segment and said second segment are joined together to form a vane.

12. The segmented portion of claim 9, 10 or 11, wherein said first segment comprises an attachment section and a platform section.

13. The segmented portion of any of claims 9 to 12, wherein said first alloy is a single crystal alloy and the second alloy has equiaxed crystals.

14. The segmented portion of any of claims 9 to 13, wherein said first segment and said second segment are coupled together at said joint section placed in a platform section, and / or
wherein, optionally, at least a portion of a heat treatment of said segmented portion occurs after a joining process or before said joining process for one or more of said first alloy and said second alloy.

15. A blade for a gas turbine engine comprising:
a first segment including an attachment section, a platform section, wherein said first segment is made of a first alloy; and
a second segment including a airfoil section, a tip shroud, and an airfoil root joint, wherein said second segment is made of a second alloy distinct from said first alloy, and wherein said second segment is coupled to said first segment at said airfoil root joint.
